# NEUE EUROPÄISCHE PATENTSCHRIFT

(11) **EP 0 245 668 B2**
(45) Veröffentlichungstag und Bekanntmachung des Hinweises auf die Entscheidung über den Einspruch: **10.02.1993**
(45) Hinweis auf die Patenterteilung: 08.08.1990
(21) Anmeldenummer: 87105623.0
(22) Anmeldetag: 15.04.1987
(51) Int. Cl.: F16D 3/50

(54) **Hochelastische Wellenkupplung**
Highly flexible shaft coupling
Accouplement d'arbres à haute élasticité

(30) Priorität: 14.05.1986 DE 3616232; 15.07.1986 DE 3623763; 23.09.1986 DE 3632184
(43) Veröffentlichungstag der Anmeldung: 19.11.1987
(73) Patentinhaber: Maschinenfabrik Stromag GmbH, D-59425 Unna (DE)
(72) Erfinder: Böhm, Heinz-Dieter, Dr.-Ing., D-4750 Unna (DE); Dorok, Günter, Dipl.-Ing (FH), D-4708 Kamen/Heeren (DE); Kerstin, Gunther, D-4770 Soest (DE); Künne, Michael, D-4670 Lüne (DE); Rüggen, Werner, D-4755 Holzwickede (DE)
(74) Vertreter: Wilhelm, Hans-Herbert, Dr.-Ing.

(56) Entgegenhaltungen:
- DE-A- 1 625 758
- DE-C- 717 231
- DE-C- 3 441 008
- GB-A- 912 253
- GB-A- 2 094 936
- GB-A- 2 164 726
- US-A- 2 207 496
- US-A- 2 234 443
- US-A- 3 557 573
- Prospekt" Hochelastische Kupplungen EZR" (Vulkan)

## Beschreibung

Die Erfindung betrifft eine hochelastische Wellenkupplung, deren Kupplungshälften über mindestens zwei axial hintereinander geschaltete Ringanordnungen, bestehend aus Kupplungskörpern aus gummielastischem Material untereinander verbunden sind, wobei Kupplungskörper mit im wesentlichen V-förmigem Querschnitt Verwendung finden, an deren schrägen Stirnseiten konische Seitenringe zur Befestigung an mindestens einer Kupplungshälfte anvulkanisiert sind.

Wellenkupplungen dieser Art sind bekannt (DE-A-34 34 722). Bei den bekannten Bauarten sind zwei Ringanordnungen von identisch aufgebauten aber spiegelsymmetrisch zu einer in einer mittleren Ebene angeordneten Verbindungsplatte vorgesehene Kupplungskörper mit V-förmigem Querschnitt in der Form von Segmenten vorgesehen, die untereinander jeweils um die halbe Segmentteilung gegeneinander versetzt sind. Die axial hintereinander geschalteten Kupplungskörper werden dort vorgesehen, um den Verdrehwinkel zu vergrößern, dennoch aber die Fliehkräfte der einzelnen Kupplungskörper beherrschen zu können. Solche Kupplungen weisen gewisse Nachteile auf. Die V-förmigen Kupplungskörper nämlich führen zu einer axialen Verlagerung während des Betriebes, die dort durch eine Membranscheibe aufgefangen werden soll, welche ihrerseits die Verbindung zu einer eine Kupplungsnabe bildenden Kupplungshälfte darstellt. Diese V-förmigen Kupplungskörper sind auch nicht geeignet, Axialverlagerungen der Kupplungshälften gegeneinander aufzunehmen.

Auch andere bekannte Bauarten von Kupplungen (DE-C-34 41 008 oder DE-A-31 09 388) weisen diese Nachteile der Kupplungskörper mit V-förmigem Querschnitt auf.

Es hat sich gezeigt, daß sich unter der Einwirkung eines Drehmomentes die Segmente des Kupplungsringes der Kupplungskörper mit V-förmigem Querschnitt in der Weise verformen, daß sich der innere Rand der Segmente, insbesondere der konischen Seitenringe, in Umfangrichtung schief stellt, und zwar unterschiedlich nach der jewens vornandenen Drehrichtung. Diese Schiefstellung wirkt sich auf die Belastbarkeit ungünstig aus und sollte vermieden werden. Der Erfindung liegt daher auch die Aufgabe zugrunde, die Wellenkupplung in dieser Hinsicht zu verbessern.

Der Erfindung liegt die Aufgabe zugrunde, eine Kupplung zu schaffen, die bei gleicher radialer Verdrehmöglichkeit und damit bei gleicher Drehfedersteife die nachteligen Erscheinungen der axialen Verlagerung und der Schiefstellung der Seitenringe vermeidet.

Zur Lösung dieser Aufgabe werden bei einer hochelastischen Wellenkupplung der eingangs genannten Art die kennzeichnenden Merkmale des Anspruch 1 vorgesehen. Diese Ausgestaltung weist den Vorteil auf, daß eine Kombinationswirkung von zwei verschieden aufgebauten Kupplungskörpern aus gummielastischem Material erreicht wird, wobei die Eigenschaften des einen Kupplungskörpers jene des anderen weitgehend ausgleichen. So ist in bekannter Weise das V-förmige Element gut geeignet für eine große Verdrehung der beiden Kupplungsseiten gegeneinander und es erlaubt auch eine ausreichende radiale Verlagerungsfähigkeit seiner beiden Stirnseiten gegeneinander. Axiale Verlagerungen dagegen, die insbesondere durch die Verdrehung der V-förmigen Elemente bewirkt werden, lassen sich von den Kupplungskörpern, die innerhalb der zylindrischen Ringe liegen, aufnehmen. Diese Kupplungskörper sind außerdem geeignet, auch radiale Verlagerungen und Verdrehungen aufzunehmen. Bedingt durch die Konstruktion der neuen Kupplung allerdings sind radiale Verlagerungen nur im Zusammenhang mit fertigungsbedingten Toleranzen aufzunehmen. Die Axialverlagerungen dagegen können gut aufgenommen werden, und zwar sowohl was die Größe der axialen Auslenkung betrifft als auch im Hinbiickaufdie Größe der Axialkraft. Die Federrate ist klein und bleibt weitgehend konstant.

Durch die Kombination dieser Kupplungskörper kann nicht nur der Nachteil V-förmiger Kupplungskörper eliminiert werden. Es ist darüber hinaus auch möglich, axiale Verlagerungen der An- und Abtriebsseite des Aggregates selbst aufzunehmen, gleichgültig, ob es sich um Montageungenauigkeiten handelt oder um betriebsbedingte Verlagerungen. Die neue Kupplung entwikkelt unter Belastung keine freie Axialkraft. Wenn zwei Ringanordnungen von V-förmigen Elementen verwendet werden sollen, so kann die freie Axialkraft dieser Elemente in bekannter Weise durch eine Stahlmembran aufgenommen werden.

Durch die neue Ausgestaltung werden folgende Vorteile außerdem erreicht:
a) Die Federrate des Gummielementes ist sehr viel kleiner als dieeiner Stahtmembran. Durch die Kombination der beiden Kupplungskörper kann daher die Kennlinie linear gehalten werden. Das bedeutet, daß die Federrate konstant ist und sich auch nicht bei größer werdendem Weg ändert.
b) Die axiale Verlagerungsfähigkeit ist ohne Einbußen im Hinblick auf die Lebensdauer deutlich größer als bei einer Stahlmemebran, wie sie bei den bekannten Bauarten zur Aufnahme der Axialverlagerung notwendig ist.
c) Die Montage der Gummielemente mit den parallel Verlaufenden Vulkanisationsflächen ist unkomplizierter als jene einer Stahlemembran, weil die Stahlmembran eine sehr genaue Ausrichtung erfordert und sich bei Verspannungen auch leicht verwirft. Dies ist bei den Gummielementen nicht der Fall.
d) Schließlich lassen sich wegen dieser baulichen Eigenarten auch die V-förmigen Gummielemente leichter auswechseln. Natürlich kann auch bei der neuen Kupplung jede Ringanordnung aus Segmenten bestehen, die zu einem Ring zusammengefügt werden.

Durch die Anordnung des mit der Ringnutversehnen Ringes zentrieren sich die einzelnen Segmente des Kupplungsringes mit den V-förmigen Kupplungskörpern. Der Ring selbst führt sich auf der glatten, geeignet ausgebildeten Umfangsfläche des Drehlagers, welches auf der Nabe der Kupplungshälfte sitzt.

Es ergeben sich bemerkenswerte Vorteile durch diese Ausgestaltung:
a) Die einzelnen Segmente können korrekt montiert werden, sie werden mit der Einführung des inneren Randes in die Ringnut exakt zentriert und axial gegeneinander fixiert.
b) Die Verformung der Segmentplatten bleibt auf ein sehr geringes Maß beschränkt, das sich aus dem notwendigen Spiel aus Randdicke der Segmentplatte und Nutbreite des Ringes ergibt.
c) Die elastische Verformung der Kupplungssegmente bewirkt eine axiale Veränderung der Kupplung, die durch die axiale Beweglichkeit des Ringnutringes ausgeglichen werden kann.

Weitere Vorteile und Merkmale ergeben sich aus den Unteransprüchen. Dabei bieten die Merkmale der Ansprüche 2 und 6 den Vorteil, daß der bauart bedingt zwischen den Kupplungskörpern mit axialen Vulkanisationsflächen und den V-förmigen Kupplungskörpern verbleibende Raum gleichzeitig als Belüftungsraum zur Wärmeabfuhr benutzt werden kann. Dies wird insbesondere dann vorteilhaft, wenn dieser Raum über eine axial verlaufende Öffnung, die vorzugsweise innerhalb des Innenringes der Kupplungskörper mit axialen Vulkanisationsflächen verlaufen kann, mit der Umgebung in Verbindung steht.

Es ist außerdem äußerst vorteilhaft, wenn die Kühlluftströmung durch im Bereich der Nabe angeordnete axiale Öffnungen nach der einen Seite der Kupplung und durch V-förmige öffnungen nach der anderen Seite der Kupplung hin verbessert wird. Die neue Kupplung wird daher im Betrieb, bedingt durch Trägheitskräfte, aber auch bedingt durch Wärmeabstrahlung und durch die dadurch hervorgerufene Strömung, von beiden Stirnseiten her mit Kühlluft aus der Umgebung beaufschlagt, die von beiden Seiten her, aber auch axial in den Zwischenraum zwischen den Ringanordnungen eintreten und von dort nach außen strömen kann. Dieses Abströmen erfolgt dabei einerseits durch radiale Öffnungen in dem die beiden Ringanordnungen verbindenden Zwischenring, andererseits auch durch radiale Spalte zwischen Kupplungssegmenten, welche die V-förmigen Kupplungskörper enthalten. Dadurch wird eine auch bei hoher Belastung ausreichende Kühlung erzielt.

In der Zeichnung ist ein Ausführungsbeispiel der neuen Wellenkupplung gezeigt und in der nachfolgenden Beschreibung erläutert. Es zeigen:
Fig. 1 eine Seitenansicht einer neuen Wellenkupplung, die zur Hälfte in einer Längsmittelebene geschnitten ist,
Fig. 2 den Querschnitt durch die Ausführungsform der Fig. 1 längs der Linie 11-11 und
Fig. 3 einen vergrößerten Ausschnitt der Wellenkupplung der Fig. 1.

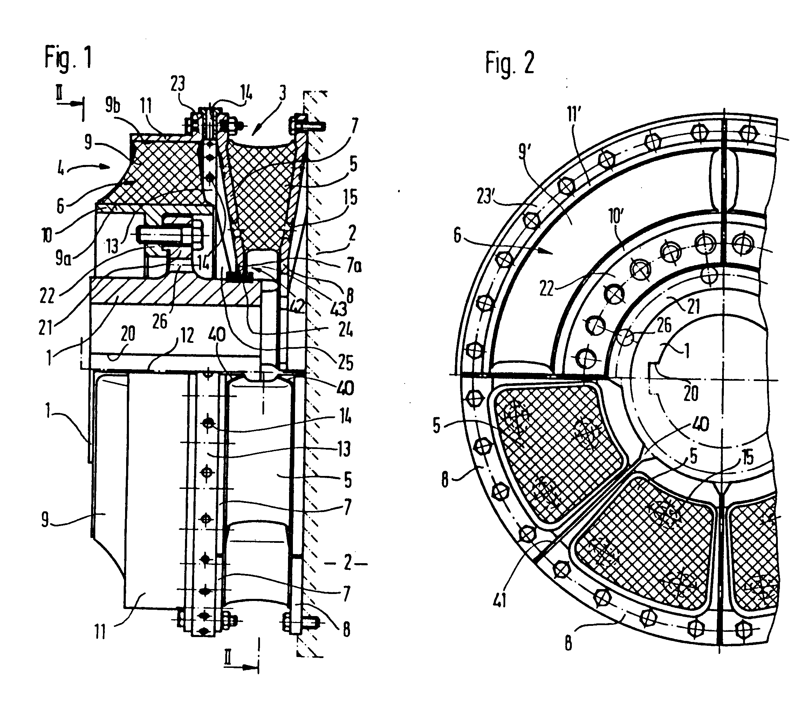

In den Fig. 1 und 2 ist eine hochelastische Wellenkupplung gezeigt, deren eine Kupplungshälfte aus einer Nabe (1) besteht, die in bekannter Weise zum Beispiel auf eine angetriebene Welle drehfest aufsetzbar ist. Die Nabe (1) ist zu diesem Zweck mit einer Nut (20) zum Einsetzen eines Paßkeiles versehen.

Die Nabe (1) weist etwa in ihrer Mitte einen nach außen gerichteten Flansch (21) auf, der fest mit einem nach innen gerichteten Flansch (22) eines zylindrischen Ringes (10) verschraubt ist, an dem der Innenumfang (9a) eines gummielastischen Elementes (9) anvulkanisiert ist, welches sich nach außen im Längsschnitt verjüngt und mit seinem Außenumfang (9b) geringerer axialer Erstreckung mit einem ebenfalls zylindrischen Außenring (11) vulkanisiert ist, der seinerseits mit einem Flansch (23) an einem Ring (13) angeschraubt ist, dessen radiale Erstreckung in etwa in der Größenordnung des Flansches (23) liegt.

Wie aus Fig. 2 erkennbar ist, sind die zylindrischen Ringe (10, 11) und auch die gummielastischen Elemente (9) nicht als ein durchgehender Ring ausgebildet, sondern aus einzelnen Segmenten (9', 11', 10') aufgebaut, die durch ihre feste Verbindung mit dem umlaufenden Ring (13) und mit dem Flansch (21) der Nabe (1) zu einem Ring vervollständigt werden. Beim Ausführungsbeispiel sind vier jeweils 90° übergreifende Segmente für die Gummielemente (9') und die dazugehürigen Ringsegmente (11', 10') vorgesehen.

Auf der anderen Seite des Ringes (13) ist eine konische Seitenwand (7) einer Ringanordnung 13) von Kupplungskörpern (5) aus gummielastischem Material mit V-förmigem Querschnitt angeschraubt. Ein zweiter konischer Seitenring (8) begrenzt die andere Stirnseite der gummielastischen Kupplungskörper (5), wobei die innige Verbindung des gummielastischen Materiales mit den konischen Seitenringen (7) bzw. (8) auch dazu noch verbessert wird, daß in den Seitenringen (7, 8) Ausnehmungen (15) vorgesehen sind, die nach dem Anvulkanisieren mit dem gummielastischen Material ausgefüllt sind.

Der Seitenring (7) ist mit seinem äußeren Rand mit dem Ring (13) verschraubt. Sein Innenrand (7a) stützt sich über ein Drehlager (24) auf der Nabe (1) ab. Zwischen dem Seitenring ('7) und der Radialebene, in der der Ring (13) verläuft sowie teilweise in dem Bereich vor dem Flansch (21) entsteht bauartbedingt ein Zwischenraum (25), der über die axial verlaufenden Öffnungen (26), die im Flansch (21) vorgesehen sind, mit der Umgebung in Verbindung steht, In den Ring (13) sind außerdem mehrere radial verlaufende Bohrungen (14) vorgesehen, die den Raum (25) auch radial nach außen in die Umgebung öffnen. Beim Betrieb kann sich dadurch durch diesen Raum (25) eine gute Belüftung zwischen den Ringanordnungen (3,4) von Kupplungskörpern verschiedener Bauart einstellen.

Der Seitenring (8) ist mit einem die zweite Kupplungshälfte bildenden Flansch (2) an seinem Außenumfang verschraubt, der in nicht näher dargestellter Weise gegenüber der anderen Kupplungshälfte (1) zentriert ist.

Wie Fig. 2 zeigt, sind auch die Kupplungskörper (5) jeweils als Segmente ausgebildet, wobei hier acht Segmente gleichmäßig auf dem Umfang verteilt zu der Ringanordnung (3) kombiniert werden. Diese Segmentierung erlaubt eine einfachere Montage. Die einzelnen Segmente werden durch ihre Befestigung am Ring (13) bzw. am Flansch (2) zentriert.

Die neue Wellenkupplung zeichnet sich im Betrieb dadurch aus, daß die bei der Verdrehung der Kupplungskörper (5) auftretenden axialen Verlagerungen in sehr einfacher Weise von den gummielastischen Elementen (9) aufgenommen werden können, ohne daß es der Anordnung einer Stahlmembran bedarf. Die Gummielemente (9) sind wegen ihrerAnordnung zwischen den zylindrischen Ringen (10, 11) ein idealer Kombinationskörper mit den V-förmigen Kupplungskörpern (5). Sie erlauben trotzdem eine Erhöhung des Verdrehwinkels, der selbstverständlich durch Gegenschaltung weiterer V-förmiger Kupplungselemente (5) und/oder gummielastischer Elemente (9) noch gesteigert werden kann. So wäre beispielsweise eine in der Ebene des Flansches (2) als Symmetrieebene vorgesehene spiegelsymmetrische Verdopplung der Anordnung der Fig. 1 möglich, ohne daß die Anordnung von axial nachgiebigen Stahlmembranen wie beim Stand der Technik nötig wäre. Durch die neue Ausgestaltu ng erhält d ie neue Wellenkupplung eine Reihe von Vorteilen, die eingangs erwähnt sind.

Bei der dargestellten Wellenkupplung erfolgt die Kühlluftströmung, wie vorher schon angedeutet, über radiale Lüftungsbohrungen (14) von dem Zwischenraum (25) aus nach außen, der sich zwischen den beiden Ringanordnungen (3 und 4) befindet und nach innen von der Kupplungsnabe (1) abgeschlossen ist. Die Zufuhr von Kühlluft erfolgt dabei zum einen von der linken Stirnseite her durch axial verlaufende Bohrungen (26) in der Nabe. Sie erfolgt aber auch durch im Bereich der Nabe unterhalb der Kupplungskörper (5) jeweils zwischen den einzelnen Segmenten, die in Fig. 2 zu erkennen sind, vorgesehene Öffnungen (40) mit V-förmigem Querschnitt, die sich radial nach außen in Spalte (41) fortsetzen, die zwischen den einzelnen Kupplungssegmenten belassen sind. Von der rechten Stirnseite der Kupplung her erfolgt daher, wenn dort stirnseitig Platz ist, eine Kühlluftströmung im Sinne des Pfeiles (42) in den Raum (43) unterhalb der einzelnen Kupplungssegmente (5). Von hier aus kann Luft dann sowohl durch die Öffnungen (40) in den Zwischenraum (25) und von dort über die Bohrungen (14) nach außen, als auch radial unmittelbar durch die Spalte (41) nach außen strömen. Dadurch wird eine ausgezeichnete Kühlung der neuen Kupplung erreicht.

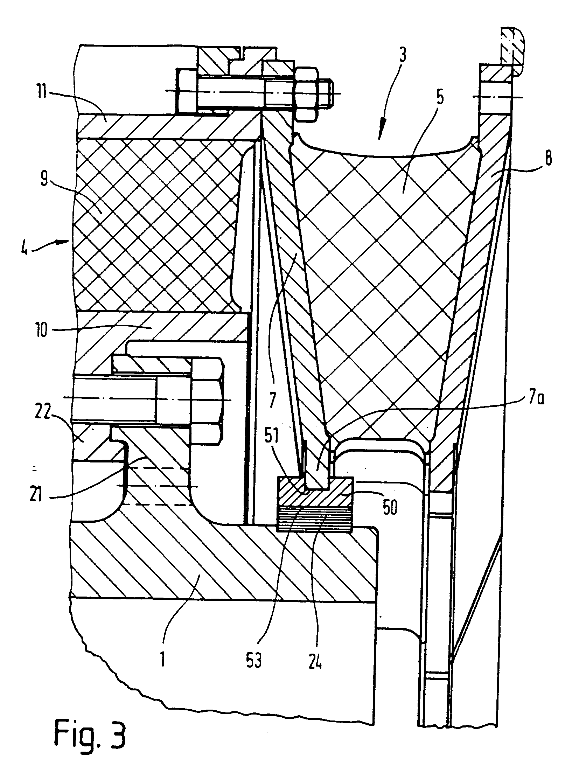

Bei der Wellenkupplung ist, wie Fig. 3 erkennen läßt, an einem Flansch (21) einer Nabe (1) der nach innen gerichtete Flansch (22) eines zylindrischen Ringes (10) angeschraubt, an dem ein gummielastisches Element (9) anvulkanisiert ist. Dieses gummielastische Element ist außen an einen weiteren zylindrischen Ring (11) anvulkanisiert, der seinerseits fest verbunden ist entweder - wie in DE-A- 36162329 - mit einem Zwischenring, oder, wie gezeigt, unmittelbar mit einem der konischen Segmente des konischen Seitenringes (7), an dem die V-förmigen elastischen Kupplungskörper (5) mit einer Seite anvulkanisiert sind, deren andere Seite an dem konischen Seitenring (8) anvulkanisiert ist. Diese V-förmigen elastischen Körper bilden eine Ringanordnung (3), die aus einzelnen Segmenten aufgebaut ist. Die zweite Ringanordnung (4) wird von den gummielastischen Elementen (9) mit den zugeordneten Ringen (11, 10) gebildet.

Auf der Nabe (1) ist axial ein Drehlager (24) gesichert, das zur radialen Abstützung des inneren Randes (7a) des konischen Seitenringes (7) bzw. des Seitenringsegmentes dient. Auf dieses Drehlager (24) aufgeschoben ist ein Ring (50), der eine umlaufende Nut (51) aufweist, in der der Innenrand (7a) des Seitenringes (7) aufgenommen wird. Der Ring (50) läßt sich auf der entsprechend ausßebildeten Umfanßsfläche (53) des Drehlaßers (24) axial verschieben. Die neue Ausführung weist den Vorteil auf, daß der Seitenring (7) bzw. dessen Segmente gegeneinander axial und radial gesichert sind. Im Betrieb kann daher eine Schiefstellung der Seitenringteile (7), die bedingt ist durch die Einwirkung des Drehmomentes, nicht auftreten. Vorteilhaft ist außerdem, daß die einzelnen Segmente sich auf diese Weise korrekt montieren lassen. Durch die Einführung des Innenrandes (7a) in die Nut (51) findet eine exakte Zentrierung und axiale Fixierung statt. Da der Ring (50) gegenüber dem Drehlager (24) verschiebbar ist, kann auch ein Ausgleich einer Axialveränderung der Kupplung beim Betrieb erfolgen.

## Patentansprüche

1. Hochelastische Wellenkupplung, deren Kupplungshälften (1, 2) über mindestens zwei axial hintereinander geschaltete Ringanordnungen (3, 4), bestehend aus Kupplungskörpern (5, 6) aus gummielastischem Material untereinander verbunden sind, wobei Kupplungskörper mit im wesentlichen V-förmigem Querschnitt Verwendung finden, an deren schrägen Stirnseiten konische Seitenringe (7, 8) zur Befestigung an mindestens einer Kupplungshälfte anvulkanisiert sind, dadurch gekennzeichnet, daß einer Ringanordnung (3) aus Kupplungskörpern (5) mit V-förmigem Querschnitt eine benachbarte Ringanordnung (4) von Kupplungskörpern (6) zugeordnet ist, die aus gummielastischen Elementen (9) bestehen, die jeweils mit ihrem Innen- und Außenumfang (9a, 9b) an zylindrischen Ringen (10, II) anvulkanisiert sind, deren Drehachse (12) mit der Rotationsachse der Kupplung zusammenfällt, und daß der an der benachbarten Ringanordnung (4) der Kupplungselemente (6) befestigte konische Seitenring (7) mit seinem Innenrand (7a) über ein Drehlager (24) an der Nabe (1) abgestützt ist und daß dem Drehlager (24) ein Ring (50) zugeordnet ist, der eine umlaufende Nut(51) zurAufnahme des inneren Randes (7a) des Seitenringes (7) aufweist.

2. Wellenkupplung nach Anspruch 1, dadurch gekennzeichnet, daß einer der zylindrischen Ringe (10) mit einer Kupplungshälfte (1), einer der konischen Seitenringe (8) mit der anderen Kupplungshälfte (2) und die den benachbarten Kupplungskörpern zugewandten Ringe (11) bzw. (7) über einen umlaufenden Zwischenring (13) aus Metall untereinander verbunden sind.

3. Wellenkupplung nach den Ansprüchen 1 und 2, dadurch gekennzeichnet, daßderzylindrische Innenring (10) mit der einen Kupplungshälfte (11) und der am freien Ende an den V-förmigen Kupplungskörpern (5) anvulkanisierte konische Seitenring (8) in seinem radial äußeren Bereich mit der zweiten Kupplungshälfte (2) verbunden ist.

4. Wellenkupplung nach den Ansprüchen 1 bis 3, dadurch gekennzeichnet, daß der mit dem Zwischenring (13) verbundene konische Seitenring (7) mit seinem Außenrand am Zwischenring (13) befestigt ist und mit seinem Innenrand (7a) drehbar an einer Kupplungsnabe (1) abgestützt ist, die eine Kupplungshälfte bildet.

5. Wellenkupplung nach den Ansprüchen 3 und 4, dadurch gekennzeichnet, daß die andere, Kupplungshälfte von einem mit dem Außenrand des konischen Seitenringes (8) verbundenen Flansch (2) gebildet ist.

6. Wellenkupplung nach Anspruch 2, dadurch gekennzeichnet, daß der Zwischenring (13) mit radial verlaufenden Belüftungsbohrungen (14) o.dgl. versehen ist.

7. Wellenkupplung nach Anspruch 1 oder einem der übrigen Ansprüche, dadurch gekennzeichnet, daß die Seitenringe (7, 8) mit Durchbrechungen (15) versehen sind, die mit der anvulkanisierten Gummimasse ausgefüllt sind.

8. Wellenkupplung nach Anspruch 1, dadurch gekennzeichnet, daß die Spitzen der Konusform der an die V-förmigen Kupplungskörper anvulkanisierten Seitenringe (7, 8) jeweils auf der Kupplungsachse (12) liegen.

9. Wellenkupplung nach Anspruch 1 und 3, dadurch gekennzeichnet, daß der zylindrische Innenring (10) über einen nach innen weisenden Flansch mit der Kupplungshälfte (1) verbunden ist und eine größere Axiallänge aufweist als der zylindrische Außenring (11) und daß die gummielastischen Elemente (9) eine entsprechend größere axiale Innenlänge als Außenlänge aufweisen.

10. Wellenkupplung nach Anspruch 1 oder einem der übrigen Ansprüche, dadurch gekennzeichnet, daß beide Ringanordnungen (3, 4) von Kupplungskörpern (5, 6) jeweils aus Segmenten aufgebaut sind, die mit den Kupplungshälften (1, 2) bzw. mit dem umlaufenden Zwischenring (13) verschraubt sind.

11. Hochelastische Wellenkupplung nach, Anspruch 1, dadurch gekennzeichnet, daß einer der zylindrischen Ringe (10) mit einer Kupplungs hälfte (1), einer der konischen Seitenringe (8) mit der anderen Kupplungshälfte (2) und die den benachbarten Kupplungskörpern zugewandten Ringe (11 bzw. 7) über einen umlaufenden Zwischenring (13) untereinander verbunden sind, in dem radial verlaufende Lüftungsöffnungen (14) vorgesehen sind und daß der bauartbedingt zwischen den Kupplungskörpern verbleibende Raum als Belüftungsraum zur Wärmeabfuhr dient und über eine axial verlaufende Öffnung (26) mit der Umgebung in Verbindung steht.

12. Wellenkupplung nach Anspruch 11, dadurch gekennzeichnet, daß der Ring (50) auf die Umfangsfläche (52) des axial auf der Nabe (1) gesicherten Drehlagers (24) aufgeschoben, aber axial gegenüber dem Drehlager (24) bewegbar ist.

13. Wellenkupplung nach Anspruch 11, dadurch gekennzeichnet, daß die axiale Öffnung (26) innerhalb des Innenringes (10) der Kupplungskörper (4) mit axialen Vulkanisationsflächen verläuft.

14. Wellenkupplung nach Anspruch 11, dadurch gekennzeichnet, daß der zwischen den Ringanordnungen (3 und 4) der Kupplungskörper verbleibende Zwischenraum (25) über weitere Öffnungen (40) mit V-förmigem Querschnitt, die sich unterhalb der Ringanordnung (3) der V-förmigen Kupplungskörper (5) erstrecken, ebenfalls mit der Umgebung verbunden ist.

15. Wellenkupplung nach Anspruch 14, dadurch gekennzeichnet, daß die V-förmigen Öffnungen (40) im Bereich der Nabe (1) vorgesehen sind und sich radial nach außen in Spalten (41) fortsetzen, die zwischen einzelnen Kupplungssegmenten verlaufen.

## Claims

1. Highly flexible shaft coupling, the coupling halves (1,2) of which are connected to each other via at least two ring arrangements (3,4), which are mounted axially behind one another and consist of coupling bodies (5,6) of a rubber elastic material, the coupling bodies which are used having an essentially V-shaped cross section and onto the inclined end faces of which conical side rings (7,8) are moulded for attachment to at least one coupling half, characterised in that an adjacent ring arrangement (4) of coupling bodies (6) is associated with a ring arrangement (3) of coupling bodies (5) with a V-shaped cross section, the former bodies consisting of rubber elastic elements (9) which are in each case moulded at their inner and outer circumference (9a,9b) onto cylindrical rings (10,11), the rotational axis (12) of which coincides with the rotational axis of the coupling, and that the conical side ring (7), which is attached to the adjacent ring arrangement (4) of coupling elements (6), is supported at its inner edge (7a) on the hub (1) via a pivot bearing (24), and that a ring (50) is associated with the pivot bearing (24), which ring comprises an encircling groove (51) to accommodate the inner edge (7a) of the side ring (7).

2. Shaft coupling according to Claim 1, characterised in that one of the cylindrical rings (10) is connected to one coupling half (1), one of the conical side rings (8) is connected to the other coupling half (2) and the rings (11) and (7) facing the adjacent coupling bodies are connected to each other by means of an encircling intermediate ring (13) of metal.

3. Shaft coupling according to Claims 1 and 2, characterised in that the cylindrical inner ring (10) is connected to one coupling half (1) and the conical side ring (8), which is moulded at its free end onto the V-shaped coupling bodies (5), is connected in its radially outer area to the second coupling half (2).

4. Shaft coupling according to Claims 1 to 3, characterised in that the conical side ring (7), which is connectged to the intermediate ring (13), is attached at its outer edtge to the intermediate ring (13) and it rotatably supported at its inner edge (7a) on a coupling hub (1), which forms one coupling half.

5. Shaft coupling according to Claims 3 and 4, characterised in that the ot her coupll ing half is formed by a flange (2), which is connected to the outer edge of the conical side ring (8).

6. Shaft coupling according to Claim 2, characterised in that the intermediate ring (13) is provided with radially extending ventilating bores (14) or similar.

7. Shaft coupling according to Claim 1 or one of the other Claims, characterised in that the side rings (7,8) are provided with openings (15), which are filled with the moulded-on rubber material.

8. Shaft coupling according to Claim 1, characterised in that the peaks of the cone shapes of the side rings (7,8) which are moulded onto the V-shaped coupling bodies both lie on the coupling axis (12).

9. Shaft coupling according to Claims 1 and 3, characterised in that the cylindrical inner ring (10) is connected via an inwardly pointing flange to the coupling half (1) and has a greater axial length than the cylindrical outer ring (11), and that the rubber elastic elements (9) have a correspondingly greater axial inner length than outer length.

10. Shaft coupling according to Claim 1 or one of the other Claims characterised in that both ring arrangements (3,4) of coupling bodies (5,6) are composed of segments which are screwed to the coupling halves (1,2) and to the encircling intermediate ring (13).

11. Highly flexible shaft coupling according to Claim 1, characterised in that one of the cylindrical rings (10) is connected to one coupling half (1), one of the conical side rings (8) is connected to the other coupling half (2) and the rings (11 and 7) facing the adjacent coupling bodies are connected to each other by means of an encircling intermediate ring (13), in which radially extending ventilating holes (14) are provided, and that the space left between the coupling bodies due to the design serves as a ventilating space for the removal of heat and communicates with the environment via an axially extending hole (26).

12. Shaft coupling according to Claim 11, characterised in that the ring (50) is pushed onto the circumferential surface (52) of the pivot bearing (24), which is secured axially on the hub (1), but can move axiallywith respect to the pivot bearing (24).

13. Shaft coupling according to Claim 11, characterised in that the axial hole (26) extends inside the inner ring (10) of the coupling bodies (4) with axial moulded surfaces.

14. Shaft coupling according to Claim 11, characterised in that the space (25) left between the ring arrangements (3 and 4) of coupling bodies also communicates with the environment via further holes (40) which have a V-shaped cross section and extend below the ring arrangement (3) of V-shaped coupling bodies (5).

15. Shaft coupling according to Claim 14, characterised in that the V-shaped holes (40) are provided in the area of the hub (1) and continue radially outwards into the openings (41) which extend between individual coupling segments.

## Revendications

1. Accouplement d'arbres à haute élasticité, dont les moitiés d'accouplement (1,2) sont reliées mutuellement par au moins deux dispositions annulaires (3, 4) , placées l'une après l'autre, composées de corps d'accouplement (5, 6) en matière caoutchouc-élastique, les corps d'accouplement étant essentiellement d'une section en forme de V, aux faces frontales obliques desquels des anneaux latéraux coniques (7, 8) sont vulcanisés afin de les relier à au moins une moitié d'accouplement, caractérisé en ce qu'une disposition annulaire (3) de corps d'accouplement (5) ayant une section en forme de V, est ajoutée à une disposition annulaire voisine (4) de corps d'accouplement (6), composée d'éléments caoutchouc-élastiques (9), dont la circonférence intérieure et extérieure (9a, 9b) est chaque fois vulcanisée aux anneaux cylindriques (10, 11), leur axe de rotation (12) coïncidant avec l'axe de rotation de l'accouplement, et en ce que le bord intérieur (7a) de l'anneau latéral conique (7), fixé à la disposition annulaire voisine (4) d'éléments d'accouplement (6), s'appuie sur le moyeu (1) au moyen d'un palier de pivotement (24) et en ce qu'on a monté au palier de pivotement (24) un anneau (50), muni d'une rainure circonférentielle, pour recevoir le bord intérieur (7a) de l'anneau latéral (7).

2. Accouplement d'arbres selon la revendication 1, caractérisé en ce que l'un des anneaux cylindriques (10) est relié à l'une des moitiés d'accouplement, l'un des anneaux latéraux coniques (8) est relié à l'autre moitié d'accouplement (2) et les anneaux (11), respectivement (7), dirigés vers les corps d'accouplement voisins sont reliés mutuellement au moyen d'un anneau intermédiaire ininterrompu (13) en métal.

3. Accouplement d'arbres selon les revendications 1 et 2, caractérisé en ce que l'anneau intérieurcy- lindrique (10) et relié à l'une des moitiés d'accouplement (11) et en ce que l'anneau latéral conique (8), vulcanisé aux corps d'accouplement (5) de section en forme de V, est relié de son côté libre à la deuxième moitié d'accouplement (2) dans sa zone radialement extérieure.

4. Accouplement d'arbres selon les revendications 1 à 3, caractérisé en ce que l'anneau latéral conique (7) relié à l'anneau intermédiaire (13) est, de son bord extérieur, relié à l'anneau intermédiaire et dont le bord intérieur (7a) est supporté, de manière pivotante, par un moyeu (1), constituant une moitié d'accouplement.

5. Accouplement d'arbres selon les revendications 3 et 4, caractérisé en ce que l'autre moitié d'accouplement est constituée par une bride (2), reliée au bord extérieur de l'anneau latéral conique (8).

6. Accouplement d'arbres selon la revendication 2, caractérisé en ce que l'anneau intermédiaire (13) est muni d'alésages de ventilation (14), ou similaires, s'étendant dans le sens radial.

7. Accouplement d'arbres selon la revendication 1 ou l'une ou l'autre des autres revendications, caractérisé en ce que les anneaux latéraux (7, 8) possèdent des évidements qui sont remplis de la masse de caoutchouc vulcanisée.

8. Accouplement d'arbres selon la revendication 1, caractérisé en ce que les pointes de la forme conique des anneaux latéraux (7, 8) vulcanisés aux corps d'accouplement en forme de V se situent chaque fois dans l'axe de l'accouplement (12).

9. Accouplement d'arbres selon les revendications 1 et 3, caractérisé en ce que l'anneau intérieurcy- lindrique (10) est relié à la moitié d'accouplement (1) au moyen d'une bride, dirigée vers l'intérieur et possède une longueur axiale plus importants que l'anneau extérieur cylindrique (11) et en ce que les éléments caoutchouc-élastiques (9) possèdent une longueur intérieure axiale, qui est à l'avenant, plus importante que la longueur extérieure.

10. Accouplement d'arbres selon les revendications 1 ou lune ou l'autre des autres revendications, caractérisé en ce que les deux dispositions annulaires (3, 4) de corps d'accouplement (5, 6) sont chaque fois composées de segments, qui sont boulonnés aux moitiés d'accouplement (1, 2), respectivement à l'anneau intermédiaire ininterrompu (13).

11. Accouplement d'arbres à haute élasticité selon la revendication 1, caractérisé en ce que l'un des anneaux cylindriques (10) est relié à l'une des moitiés d'accouplement (1), l'un des anneaux latéraux coniques (8) à l'autre moitié d'accouplement (2) et les anneaux (11, respectivement 7), dirigés vers les corps d'accouplement voisins, sont reliés mutuellement au moyen d'un anneau intermédiaire ininterrompu (13), dans lequel des orifices de ventilation (14) sont prévus, s'étendant dans le sens radial, et en ce que l'espace qui, déterminée par la construction, reste entre les corps d'accouplement, sert d'espace de ventilation pour la dissipation de la chaleur et qui est en communication avec l'atmosphère par un orifice (26) qui s'étend dans le sens axial.

12. Accouplement d'arbres selon la revendication 11, caractérisé en ce que l'anneau (50) est glissé sur la surface circonférentielle (52) du palier de pivotement (24), fixé axialement sur le moyeu, mais qu'il peut se déplacer librement dans le sens axial par rapport au palier de pivotement (24).

13. Accouplement d'arbres selon la revendication 11, caractérisé en ce que l'orifice axial (26) à l'intérieur de l'anneau intérieur (10) des corps d'accouplement (4) s'étend par des surfaces de vulcanisation axiales.

14. Accouplement d'arbres selon la revendication 11, caractérisé en ce que l'espace intermédiaire (25), restant entre les dispositions annulaires (3, 4) des corps d'accouplement, est également en communication avec l'atmosphère par d'autres orifices (40) d'une section en forme de V, se trouvant au-dessous de la disposition annulaire (3) des corps d'accouplement (5) en forme de V.

15. Accouplement d'arbres selon la revendication 14, caractérisé en ce que les orifices en forme de V (40) sont prévus dans la zone du moyeu (1) et en ce qu'ils se prolongent vers l'extérieur par les fentes (41) se trouvant entre les différents segments d'accouplement.
